Europäisches Patentamt

European Patent Office

Office européen des brevets

(19)

(11) Publication number: **0 255 709**
**A2**

# EUROPEAN PATENT APPLICATION

(21) Application number: 87111132.4

(22) Date of filing: 31.07.87

(51) Int. Cl.4 **C04B 35/80** , **C04B 35/58**

(30) Priority: 04.08.86 US 892642
04.08.86 US 892634

(43) Date of publication of application:
10.02.88 Bulletin 88/06

(84) Designated Contracting States:
**DE FR GB SE**

(71) Applicant: GTE LABORATORIES
INCORPORATED
1209 Orange Street
Wilmington Delaware 19801(US)

(72) Inventor: Baldoni II, Joseph G.
118 Cleveland Street
Norfolk, MA 02056(US)
Inventor: Buljan, Sergej-Tomislav
23 Washington Drive
Acton, MA 01720(US)

(74) Representative: Patentanwälte Grünecker,
Kinkeldey, Stockmair & Partner
Maximilianstrasse 58
D-8000 München 22(DE)

(54) Ceramic based composites with improved fracture toughness.

(57) Composite materials, articles and cutting tools are prepared by densification to form a body comprising whiskers of hard refractory transition metal carbides, nitrides or carbonitrides uniformly distributed in a two-phase ceramic matrix. In one aspect of the invention, a first phase comprises silicon nitride grains and the second phase is an intergranular phase formed from one or more suitable densification aids. In another aspect, a first phase comprises silicon aluminum oxynitride grains and the second phase is formed from one or more suitable densification aids and alumina. Optionally, dispersoid particles and/or polycrystalline fibers may also be incorporated. The preferred composite article or cutting tool has a fracture toughness equal to or greater than about 3.5 MPa•m$^{\frac{1}{2}}$. Methods for preparation and use are also described.

EP 0 255 709 A2

# CERAMIC BASED COMPOSITES WITH IMPROVED FRACTURE TOUGHNESS

This invention relates to fracture and abrasion resistant materials and to articles of manufacture made therefrom. More particularly, it is concerned with fracture and abrasion resistant materials comprising transition metal carbide, nitride or carbonitride whiskers distributed in a matrix containing silicon nitride or silicon aluminum oxynitride, and with articles made therefrom.

The need for materials for cutting tool applications, with improved toughness. good strength at elevated temperatures and chemical inertness, and capable of operating at high cutting speeds has generated a widespread interest in ceramic materials as candidates to fulfill these requirements. Conventional ceramic cutting tool materials have failed to find wide application primarily due to their low fracture toughness.

Therefore, many materials have been evaluated to improve ceramic performance, such as silicon nitride and silicon aluminum oxynitride based composites for cutting tool applications. Specific examples of silicon nitride based composite cutting tools are discussed in U.S. Patent 4,388,085 to Sarin et al. (composite silicon nitride cutting tools containing particles of TiC); U.S. Patent 4,425,141 to Buljan et al. (a composite modified silicon aluminum oxynitride cutting tool containing particulate refractory metal carbides, nitrides. and carbonitrides); U.S. Patent 4,433,979 to Sarin et al. (composite silicon nitride cutting tools containing particulate hard refractory carbides or nitrides of Ti, V, Cr, Zr, Nb, Mo, Hf, Ta, and W); and U.S. Patent 4,449,989 to Sarin et al. (composite silicon nitride cutting tools coated with two or more adherent layers of refractory materials). Specific examples of silicon aluminum oxynitride based composite cutting tools are discussed in U.S. Patent 4,421,528 to Buljan et al. (process for making a composite silicon aluminum oxynitride cutting tool containing particles of hard refractory materials); and U.S. patents 4,406,669: 4,406,670, 4,424,066; 4,426,209; and 4,469,489; all to Sarin et al. (composite silicon aluminum oxynitride cutting tools coated with refractory materials).

Many improvements have been made in the toughness, abrasion resistance. high temperature strength and chemical inertness of such materials, but increased demands by the cutting tool industry require cutting tools with new and improved characteristics. In many applications, for example in gray cast iron and high nickel alloy machining, silicon nitride and silicon aluminum oxynitride tool wear have been found to be dominated by abrasion. Even at cutting speeds as high as 5000 sfm, chemical reactions between tool and workpiece are negligible in comparison. It has been found that abrasion resistance for these ceramic cutting tool materials is directly proportional to $K_{IC}^{3/4}H^{1/2}$, where $K_{IC}$ is the fracture toughness and H is the hardness. It may be seen, therefore, that further improvement in the fracture toughness of such materials could bring about significant increases in both reliability and abrasive wear resistance, providing materials for cutting tools with new and improved characteristics. The present invention provides such new and improved ceramic materials.

The wear-resistant composite materials of the invention are also expected to find wide use in wear part and structural applications, for example in dies, turbines, nozzles, etc.

In accordance with one aspect of the present invention, there is provided a densified composite comprising about 5-60% by volume of whiskers of one or more transition metal carbides, nitrides, or carbonitrides, of titanium, hafnium, tantalum, niobium, or tungsten, or mixtures or solid solutions thereof substantially evenly distributed in a two phase matrix. The matrix comprises a first phase of a ceramic material selected from the group consisting of silicon nitride and silicon aluminum oxynitride, and a continuous, intergranular phase formed from a densification aid. Where the first phase is silicon aluminum oxynitride, the intergranular phase also includes alumina. The whiskers are present in the densified composite in an amount of about 5-60% by volume. Optionally, particles and/or polycrystalline fibers of one or more carbides, nitrides, or carbonitrides, of titanium, zirconium, hafnium, vanadium, niobium, tantalum, chromium, molybdenum, or tungsten, or silicon carbide, titanium diboride, or hafnium diboride, or mixtures or solid solutions thereof may be admixed with the whiskers in an amount up to about 95% by volume of the total dispersoid mixture, but the total amount of the dispersoids should not exceed about 70% by volume. The densification aid preferably comprises about 1-25% by weight of the matrix, the balance being silicon nitride or silicon aluminum oxynitride and alumina. The composite possesses properties of a density greater than 98% of theoretical, high abrasion resistance, high hardness, a fracture toughness greater than or equal to 3.5 MPa•m$^{\frac{1}{2}}$, and resistance to oxidation at temperatures greater than 1200°C.

In accordance with other aspects of the present invention, there are provided composite articles of manufacture and cutting tools, coated composite articles and cutting tools, and processes for making the composite materials of the present invention.

For a better understanding of the present invention, together with other and further objects, advantages and capabilities thereof, reference is made to the following disclosure and appended claims.

Fracture and abrasion resistant materials according to the present invention comprise whiskers of a hard refractory transition metal carbide, nitride, or carbonitride, or mixtures or solid solutions thereof dispersed in a two-phase matrix. By the term transition metal carbide, nitride, or carbonitride, as used throughout this specification and appended claims, is meant any carbide, nitride, or carbonitride of titanium, hafnium, tantalum, niobium, or tungsten.

The hard refractory whiskers incorporated into materials in accordance with this invention each comprise a single crystal, and preferably have an average diameter of about 1-5 microns and an average length of about 10-250 microns, with a preferred aspect ratio of length to diameter of at least 5 to 1.

The useful life and performance of articles in accordance with this invention depends, in large part, on the volume taken up by the dispersed phase in the article. The whiskers should comprise about 5-60% by volume of the densified composite. The preferred range of refractory whisker content is about 5-40% by volume. A more preferred range is about 10-30% by volume.

Optionally, in addition to the whisker dispersoid the composite may include other dispersed components. For example, particles and/or polycrystalline fibers may be included in an amount of about 95% by volume of the total dispersoid mixture. The fibers and/or particles are of a hard carbide, nitride or carbonitride of titanium, zirconium, hafnium, vanadium, niobium, tantalum, chromium, molybdenum, or tungsten; or alumina, silicon nitride, silicon carbide, titanium diboride or hafnium diboride; or mixtures or solid solutions of these materials. The particle and/or fiber material may be the same or different from each other and from the whisker material. The total amount of the dispersoids including whiskers, fibers and particles, however, should not exceed about 70% and preferably is in the range of 5-40% by volume.

In accordance with the principles of the present invention, the hard refractory dispersoids are uniformly distributed in a two-phase matrix. The first phase of the matrix consists essentially of either silicon nitride or silicon aluminum oxynitride. The intergranular phase or secondary phase of the matrix is formed from one or more densification aids or, in the case of silicon aluminum oxynitride, from one or more densification aids and alumina.

For optimizing the desirable properties, particularly high temperature strength of the composite of the present invention, it is preferable to maximize the high temperature stability of the secondary, intergranular phase and to maximize the density of the final densified composites. Preferred densification aids are yttrium oxide, cerium oxide, zirconium oxide, hafnium oxide, silica, magnesia and mixtures thereof. The one or more densification aids are employed from a lower effective amount which permits high theoretical densities to an upper amount which does not unduly effect the high temperature properties. Preferably, the densification aids comprise about 1-25% by weight of the matrix; more preferably, about 1-5% by weight of the silicon nitride based matrix, or about 2-5% by weight of the silicon aluminum oxynitride based matrix.

For optimizing the desirable high temperature properties of the silicon nitride based composite of the present invention, alumina is present as a densification aid in the secondary phase of the matrix material in a minimal amount, i.e. less than about 5% by weight based on the total weight of the matrix material, and preferably less than about 3% by weight.

The intergranular phase may contain additives and impurities in addition to the hereinbefore mentioned densification aids and additives. Such further additional materials may contribute to the desirable final properties of the composite, and are preferably present in an amount less than about 5% by weight based on the weight of the secondary phase.

Impurities may be present in the starting materials used for the manufacture of the composite of the present invention. These impurities tend to become concentrated in the intergranular phase during preparation of the composite. Therefore, high purity starting materials are desired, preferably those having less than about 0.1 weight percent cation impurities. A typical undesirable impurity is calcium, which tends to deleteriously affect the secondary intergranular phase and high temperature properties.

The materials described herein have a composite microstructure of refractory whiskers, optionally with refractory fibers and/or particulate refractory grains, uniformly dispersed in a matrix containing a phase of either silicon nitride grains or silicon aluminum oxynitride grains, and a continuous intergranular phase formed from the densifying additive, or, in the silicon aluminum oxynitride matrix from the densifying additive and alumina. Because the intergranular phase is continuous, its characteristics profoundly affect the high temperature properties of the composite material. The composite materials of the present invention possess high strength at temperatures in excess of 1200°C and, in the case of the silicon nitride based material, preferably in excess of 1500°C.

Articles formed from the densified composite material according to the present invention may be coated with one or more adherent layers of hard refractory materials, for example by known chemical vapor deposition or physical vapor deposition techniques. Typical chemical vapor deposition techniques are described in U.S. Patents Nos. 4,406,667, 4,406,669, 4,406,670, 4,409,004, 4,416,670, and 4,421,525, 4,424,066, 4,426,209, and 4,469,489 all incorporated herein by reference. The hard refractory materials suitable for coating articles according to the present invention include the carbides. nitrides. and carbonitrides of titanium, zirconium, hafnium, vanadium. niobium. tantalum. chromium, molybdenum. and tungsten, and mixtures and solid solutions thereof, and alumina, zirconia, and hafnia, and mixtures and solid solutions thereof. Each layer may be the same or different from adjacent or other layers. Such coatings are especially advantageous when applied to cutting tools formed from the densified composites of the present invention.

In accordance with the invention. a method is provided for preparing the composites described above. sintering the materials to densities approaching theoretical density, i.e. greater than 98% of theoretical. while achieving optimum levels of mechanical strength and toughness at both room temperature and elevated temperature, making the composite particularly useful as cutting tools in metal removing applications.

The hard refractory whiskers, with or without other dispersoids, are dispersed in the two phase matrix which is compacted to a high density by sintering or hot pressing techniques. A composition for the production of abrasion resistant silicon nitride based materials according to the present invention are made by employing $Si_3N_4$ powder, preferably, of average particle size below about 3 microns. Densification of the silicon nitride-whisker composite is aided by the incorporation of one or more of the densification aids listed above into the initial composition.

A composition for the production of abrasion resistant silicon aluminum oxynitride based materials according to the present invention is made by employing powdered starting materials, preferably of average particle size below about 3 microns, or a prereacted powder, as described in U.S. Patent No. 4.421,528 to Buljan et al., incorporated herein by reference. Preferably, $Si_3N_4$ and $Al_2O_3$ powders are added in sufficient quantities to be equivalent to 20-90% by volume $Si_3N_4$ and 5-60% by volume $Al_2O_3$ of the total volume of the powdered starting materials. Densification of the silicon aluminum oxynitride-whisker composite is aided by the inclusion of one or more of the densification aids listed above in the initial powdered starting materials, or preferably, as described in Patent 4,421,528, the one or more densification aids in a volume % of 2-25%, are incorporated into the prereacted powder. The prereacted powder is preferably of an average particle size below about 60 mesh.

In the initial compositions employed in the fabrication, the hard refractory whiskers comprise about 5-60% of the total volume of the densified article, as set out above. Optionally, as described above, other dispersoids may be admixed with the whiskers, up to about 95% by volume of the dispersoid mixture. The total volume of the dispersoids in the densified composite should be limited to about 70% by volume. In the densified composite, the balance of the composite material comprises the matrix of silicon nitride or silicon aluminum oxynitride grains and the intergranular phase formed from the densification aid or from the densification aid and alumina. In this densified composite, the densification aid makes up about 1-25% by weight of the host matrix. The starting materials may be processed to a powder compact of adequate green strength by thoroughly mixing the matrix starting materials by processes such as dry milling or ball milling in a nonreactive liquid medium, such as toluene or methanol; admixing the whiskers and any other dispersoids by blending, preferably in a nonreactive liquid medium; and forming the mixture, for example by pressing, injection molding, extruding, or slip casting. Processing may also optionally include a presintering or prereacting step in which either the uncompacted materials or the compact is heated at moderate temperatures.

Since the strength of articles in accordance with this invention decreases with increasing porosity in the total compact, it is important that the compact be sintered or hot pressed to a density as nearly approaching 100% of theoretical density as possible, preferably greater than 98% of theoretical density. The measure of percent of theoretical density is obtained by a weighted average of the densities of the components of the compact.

To enable one skilled in the art to practice this invention, the following Examples are provided.

EXAMPLE I

Silicon nitride composite bodies were made from a starting powder formulated from 6% by weight yttria powder, 2% by weight alumina powder and the remainder silicon nitride powder, the mixture being dry milled 24 hours at 140 rpm to blend the components. The starting powder was mixed with titanium carbide (TiC) whiskers of average diameter about 5 m, average length about 250 m. Three batches were prepared: Batch 1 containing 10% by volume TiC whiskers; Batch 2, 20% by volume; Batch 3, 30% by volume. In each case, the whiskers were wet blended in methanol with the starting powder. The whisker-powder mixtures from each batch were hot pressed at a temperature of 1725°C ± 5°C, and at a pressure of 5000 psi for lengths of time sufficient to obtain composite bodies. A batch of comparative samples was also prepared in a similar manner from the same starting powder formulation, but without the whisker component. The density as percent of theoretical (%T.D.), the Knoop hardness(HKN), and fracture toughness ($K_{IC}$) of the composite bodies of each batch are shown in Table 1.

Table 1

| Batch | TiC Whisker Content, v/o | Density, % T.D. | HKN, GPa | $K_{IC}$ MPa·$m^{\frac{1}{2}}$ |
|---|---|---|---|---|
| Comparative | 0 | 98.8 | 13.8 | 3.6 |
| 1 | 10 | 100.6 | 13.8 | 4.1 |
| 2 | 20 | 100.9 | 13.9 | 4.4 |
| 3 | 30 | 102.2 | 13.1 | 7.1 |

Relative fracture toughness values were obtained by an indentation fracture test utilizing a Vickers diamond pyramid indenter. In this test the length of cracks developed at the corners of the indentation and the indentation size are used to obtain fracture toughness ($K_{IC}$) values by a relationship:

$$K_{IC} = 0.113\ HD^{\frac{1}{2}} / (1 + \frac{2D}{C_L})^{3/2}$$

where

$K_{IC}$ = fracture toughness (MPa·$m^{\frac{1}{2}}$)
H = hardness ($GN/m^2$)
D = indentation diagonal ($\mu$m)
$C_L$ = sum of cracks ($\mu$m)

The densities shown in Table 1 for the silicon nitride-whisker composites tested are greater than 100 percent of theoretical. This is a result of chemical interactions of the constituents and modification of the intergranular phase which are not accounted for in the calculation of theoretical density.

EXAMPLE 2

To 41.7 % by weight of $Si_3N_4$, which can contain from 0 to about 5% by volume $SiO_2$, about 32.85 % by weight $Al_2O_3$ powder and 4.02 % by weight $Y_2O_3$ is added. The resulting mixture is thoroughly mixed by dry ballmilling, then heat treated at 1725°C for 5 hours in a nitrogen atmosphere to produce a prereacted modified silicon aluminum oxynitride.

The prereacted material is dry ballmilled for 24 hours at 140 RPM using $Si_3N_4$ milling media to comminute the powder. To 0.70 parts by volume of prereacted silicon aluminum oxynitride, are added 0.30 parts by volume TiC whiskers of average diameter about 5$\mu$m, average length 250$\mu$m.

The whiskers are wet blended in methanol with the starting powder. The whisker-powder mixture is hot pressed at a temperature of 1725°C ± 5°C, and at a pressure of 5000 psi for a length of time sufficient to obtain a dense composite body.

EXAMPLE 3

The material can also be prepared without the prereacting step. To 41.7 % by weight of $Si_3N_4$ containing up to about 5% $SiO_2$ is added about 32.85 % by weight $Al_2O_3$ powder and 4.02 % by weight $Y_2O_3$ powder. The resulting mixture is wet ballmilled for 1/2 hour using $Si_3N_4$ milling media, dried and then dry ballmilled for 24-40 hours. To 0.70 parts by volume of the powdered mixture is added 0.30 parts by volume of TiC whiskers of average diameter of about 5$\mu$m, average length 250$\mu$m. The whiskers are wet blended in methanol with the starting powder and the mixture is dried and screened through 40 mesh screen. The whisker-powder mixture is hot pressed at a temperature of 1725 ± 5°C, and at a pressure of 5000 psi for a length of time sufficient to obtain greater than 98% (of theoretical) dense composite body.

EXAMPLE 4

The prereacted material as prepared above is dry ballmilled for 24 hours at 140 RPM using $Si_3N_4$ milling media to comminute the powder.

To 0.70 parts by volume of prereacted silicon aluminum oxynitride powder is added 0.30 parts by volume of TiC whiskers of average diameter of about 5 m, average length 250 m.

The mixture is blended with about 0.05 parts by weight polyethylene glycol-methoxypolyethylene glycol copolymer, 1 part by weight toluene and about 0.05 parts by weight methanol, and ballmilled for about 30 minutes, dried at 75°C, and then screened through a 60 mesh screen. The minus 60 mesh fraction is pressed at about 25,000 psig (173,370 kN/M²) to obtain a green compact. The residual solvents and binders in the green compact are removed by heating at 600°C in an inert atmosphere. The green compact is then sintered to a hard, highly densified product by heating to temperatures of 1700°C to 1850°C in argon, for 1½ hours.

The above Examples are not to be viewed as limiting the scope of the invention as claimed, but are intended only to be illustrative thereof. The materials of the invention can be prepared by hot pressing techniques, e.g. as described above, or by hot isostatic pressing and sintering techniques, e.g. a technique in which pressed green compacts containing the ceramic single crystal whiskers, and a sintering or densification aid are sintered to a dense, polycrystalline product. Optionally, the pressed green compact to be sintered may be formulated with, in an admixture with the whiskers, particles and/or polycrystalline fibers as described above. The materials may be combined before hot pressing or sintering by the methods described in the Examples, or by other methods known in the art.

Densified ceramic articles made in accordance with this invention are hard, tough, nonporous, abrasion resistant, and resistant to oxidation. Applications of these articles include, but are not limited to, cutting tools, mining tools, stamping and deep-drawing tools, extrusion dies, wire and tube drawing dies, nozzles, guides, bearings, and wear-resistant and structural parts, and will be especially useful as shaped cutting tools for continuous or interrupted milling, turning or boring of cast iron stock or high nickel (at least 50% Ni) alloy stock, e.g. Inconel.

**Claims**

1. A densified composite material comprising:
about 5-60% by volume of one or more first dispersoid materials selected from the group consisting of whiskers of carbides, nitrides, and carbonitrides of titanium, hafnium, tantalum, niobium, and tungsten, and solid solutions thereof; and

optionally, one or more other dispersoid materials selected from the group consisting of particles and polycrystalline fibers of carbides, nitrides, and carbonitrides of titanium, zirconium, hafnium, vanadium, niobium, tantalum, chromium, molybdenum, and tungsten, and silicon carbide, titanium diboride, hafnium diboride, and alumina, and mixtures and solid solutions thereof; wherein the other dispersoid materials are present in a total amount of about 0-95% by volume of the combined first dispersoid materials and other dispersoid materials, and the combined dispersoid materials comprise about 5-70% by volume of the densified composite material;

the remainder of the densified composite material being a two-phase matrix comprising a first phase of grains of a ceramic material selected from the group consisting of silicon nitride and silicon aluminum oxynitride, and a second, continuous intergranular phase formed from, in the case of the silicon nitride first phase, one or more suitable densification aids or, in the case of the silicon aluminum oxynitride, one or more suitable densification aids and alumina;

wherein the dispersoid materials are substantially uniformly distributed in the two-phase matrix, and the densified composite material has a ensity greater than about 98% of theoretical and a fracture toughness greater than or equal to 3.5 MPa•m½.

2. A densified composite material in accordance with claim 1 wherein the whiskers comprise from about 5-40% by volume of the densified composite material.

3. A densified composite material in accordance with claim 1 wherein the whiskers comprise from about 10-30% by volume of the densified composite material.

4. A densified composite material in accordance with claim 1 wherein the whiskers are of an average diameter of about 1-5 microns and an average length of about 10-250 microns. ·

5. A densified composite material in accordance with claim 4 wherein the whiskers are of an aspect ratio of length to diameter of at least 5 to 1.

6. A densified composite material in accordance with claim 1 wherein the one or more densification aids are selected from the group consisting of yttrium oxide. cerium oxide. zirconium oxide. hafnium oxide. silica, magnesia, and mixtures thereof.

7. A densified composite material in accordance with claim 6 wherein the one or more densification aids comprise 1-25% by weight of the two-phase matrix.

8. A densified silicon nitride based composite material in accordance with claim 1 wherein the second phase includes alumina as a densification aid in an amount up to about 5% by weight of the two-phase matrix, alone or in combination with other densification aids, and wherein the one or more densification aids comprise about 1-25% by weight of the two-phase matrix.

9. A densified composite wear part formed from the densified composite material according to claim 1.

10. A densified composite structural part formed from the densified composite material according to claim 1.

11. A densified composite article comprising a cutting tool, and comprising:

about 5-60% by volume of one or more first dispersoid materials selected from the group consisting of whiskers of carbides, nitrides, and carbonitrides of titanium, hafnium, tantalum, niobium, and tungsten, and solid solutions thereof; and

optionally, one or more other dispersoid materials selected from the group consisting of particles and polycrystalline fibers of carbides, nitrides, and carbonitrides of titanium, zirconium, hafnium, vanadium, niobium, tantalum, chromium, molybdenum, and tungsten, and silicon carbide, titanium diboride, hafnium diboride, and alumina, and mixtures and solid solutions thereof; wherein the other dispersoid materials are present in a total amount of about 0-95% by volume of the combined first dispersoid materials and other dispersoid materials, and the combined dispersoid materials comprise about 5-70% by volume of the densified composite article;

the remainder of the densified composite article being a two-phase matrix comprising a first phase of silicon nitride grains and a second, continuous intergranular phase formed from one or more suitable densification aids selected from the group consisting of yttrium oxide, cerium oxide, hafnium oxide, zirconium oxide, silica, magnesia, and mixtures thereof, the one or more densification aids 1-25% by weight of the matrix;

wherein the dispersoid materials are substantially uniformly distributed in the two-phase matrix; the whiskers are of an average diameter of about 1-5 microns, an average length of about 10-250 microns, and an aspect ratio of length to diameter of at least 5 to 1; and the densified composite article has a density greater than about 98% of theoretical and a fracture toughness greater than or equal to 3.5 MPa•m$^{\frac{1}{2}}$.

12. A densified composite article according to claim 11 wherein the one or more densification aids further include alumina in an amount up to about 5% by weight of the two-phase matrix.

13. A densified composite article comprising a cutting tool, and comprising:

about 5-60% by volume of one or more first dispersoid materials selected from the group consisting of whiskers of carbides, nitrides, and carbonitrides of titanium, hafnium, tantalum, niobium, and tungsten, and solid solutions thereof; and

optionally, one or more other dispersoid materials selected from the group consisting of particles and polycrystalline fibers of carbides, nitrides, and carbonitrides of titanium, zirconium, hafnium, vanadium, niobium, tantalum, chromium, molybdenum, and tungsten, and silicon carbide, titanium diboride, and hafnium diboride, and mixtures and solid solutions thereof; wherein the other dispersoid materials are present in a total amount of about 0-95% by volume of the combined first dispersoid materials and other dispersoid materials, and the combined dispersoid materials comprise about 5-70% by volume of the densified composite article;

the remainder of the densified composite article being a two-phase matrix comprising a first phase of silicon aluminum oxynitride grains and a second, continuous intergranular phase formed from alumina and one or more suitable densification aids selected from the group consisting of yttrium oxide, cerium oxide, hafnium oxide, zirconium oxide, silica, magnesia, and mixtures thereof, the one or more densification aids comprising 1-25% by weight of the matrix;

wherein the dispersoid materials are substantially uniformly distributed in the two-phase matrix; the whiskers are of an average diameter of about 1-5 microns, an average length of about 10-250 microns, and an aspect ratio of length to diameter of at least 5 to 1; and the densified composite article has a density greater than about 98% of theoretical and a fracture toughness greater than or equal to 3.5 MPa•m $^{\frac{1}{2}}$.

14. A densified composite article according to claim 9, 10, 11 or 13 further comprising one or more adherent hard refractory coating layers independently selected from the group consisting of carbides. nitrides, and carbonitrides of titanium, zirconium, hafnium, vanadium. niobium. tantalum. chromium. molybdenum, and tungsten, and mixtures and solid solutions thereof and alumina. zirconia. and hafnia, and mixtures and solid solutions thereof.

15. A densified composite article according to claim 14 wherein each coating layer is of a thickness of about 0.1-10 microns.

16. A densified composite article according to claim 15 wherein the combined thickness of the one or more coating layers is less than or equal to 20 microns.

17. A method for preparing a densified composite material comprising the steps of:

mixing together by wet blending in a nonreactive liquid medium (1) a starting formulation of silicon nitride powder mixed with one or more suitable powdered densification aids, in a ratio of silicon nitride to densification aid of between 1 to 100 and 1 to 4; (2) a sufficient quantity to comprise about 5-60% by volume of the densified composite material, of one or more first dispersoid materials selected from the group consisting of whiskers of carbides, nitrides, and carbonitrides of titanium, hafnium. tantalum, niobium. and tungsten, and solid solutions thereof; and (3) optionally, one or more other dispersoid materials selected from the group consisting of particles and polycrystalline fibers of carbides. nitrides. and carbonitrides of titanium, zirconium, hafnium, vanadium, niobium, tantalum, chromium, molybdenum, and tungsten, and silicon carbide, titanium diboride, hafnium diboride, and alumina, and mixtures and solid solutions thereof, the other dispersoid materials comprising about 0-95% by volume of the combined first dispersoid materials and other dispersoid materials, and the combined dispersoid materials being in an amount to comprise about 5-70% by volume of the densified composite material; and

consolidating the mixture to form a densified composite material comprising: a two phase matrix comprising a first phase of silicon nitride grains and a second, continuous, intergranular phase formed from the densification aids; and the combined dispersoid materials substantially uniformly distributed in the two-phase matrix; the densified composite material having a density greater than about 98% of theoretical and a fracture toughness greater than or equal to 3.5 MPa•m $^{\frac{1}{2}}$.

18. A method for preparing a densified composite material comprising the steps of:

mixing together by wet blending in a nonreactive liquid medium (1) a starting formulation of 20-90% by volume silicon nitride powder and 5-60% by volume $Al_2O_3$ powder mixed with 2-25% by volume of one or more suitable powdered densification aids, all % by volume being relative to the volume of the starting formulation; (2) a sufficient quantity to comprise about 5-60% by volume of the densified composite material, of one or more first dispersoid materials selected from the group consisting of whiskers of carbides, nitrides, and carbonitrides of titanium, hafnium, tantalum, niobium, and tungsten, and solid solutions thereof; and (3) optionally, one or more other dispersoid materials selected from the group consisting of particles and polycrystalline fibers of carbides, nitrides, and carbonitrides of titanium, zirconium, hafnium, vanadium, niobium, tantalum, chromium, molybdenum, and tungsten, and silicon carbide, titanium diboride, and hafnium diboride, and mixtures and solid solutions thereof, the other dispersoid materials comprising about 0-95% by volume of the combined first dispersoid materials and other dispersoid materials, and the combined dispersoid materials being in an amount to comprise about 5-70% by volume of the densified composite material; and

consolidating the mixture to form a densified composite material comprising: a two phase matrix comprising a first phase of silicon aluminum oxynitride grains and a second, continuous, intergranular phase formed from the densification aids and alumina; and the combined dispersoid materials substantially uniformly distributed in the two-phase matrix; the densified composite material having a density greater than about 98% of theoretical and a fracture toughness greater than or equal to 3.5 MPa•m $^{\frac{1}{2}}$.

19. A method for preparing a densified composite material comprising the steps of:

preparing a prereacted silicon aluminum oxynitride-densification aid powder by mixing 20-90% $Si_3N_4$ powder, 5-60% $Al_2O_3$ powder, and 2-25% of one or more suitable powdered densification aids, heat treating the powder mixture to cause the powders to react to form a modified silicon aluminum oxynitride, and comminuting the prereacted powders;

mixing together by wet blending in a nonreactive liquid medium (1) the prereacted modified silicon aluminum oxynitride powder (2) a sufficient quantity to comprise about 5-60% by volume of the densified composite material, of one or more first dispersoid materials selected from the group consisting of whiskers of carbides, nitrides, and carbonitrides of titanium, hafnium, tantalum, niobium, and tungsten, and solid solutions thereof; and (3) optionally, one or more other dispersoid materials selected from the group consisting of particles and polycrystalline fibers of carbides, nitrides, and carbonitrides of titanium, zirconium, hafnium, vanadium, niobium, tantalum, chromium, molybdenum, and tungsten, and silicon carbide, titanium diboride, and hafnium diboride, and mixtures and solid solutions thereof, the other dispersoid materials comprising about 0-95% by volume of the combined first dispersoid materials and other dispersoid materials, and the combined dispersoid materials being in an amount to comprise about 5-70% by volume of the densified composite material; and

consolidating the mixture to form a densified composite material comprising: a two phase matrix comprising a first phase of silicon aluminum oxynitride grains and a second, continuous, intergranular phase formed from the densification aids and alumina; and the combined dispersoid materials substantially uniformly distributed in the two-phase matrix; the densified composite material having a density greater than about 98% of theoretical and a fracture toughness greater than or equal to 3.5 MPa•m$^{\frac{1}{2}}$.

20. A method for preparing a densified composite material comprising the steps of:

preparing a prereacted silicon aluminum oxynitride-densification aid powder by mixing 20-90% $Si_3N_4$ powder, 5-60% $Al_2O_3$ powder, and 2-25% of one or more suitable powdered densification aids, heat treating the powder mixture to cause the powders to react to form a modified silicon aluminum oxynitride, and comminuting the prereacted powders;

mixing together (1) the prereacted modified silicon aluminum oxynitride powder; (2) a sufficient quantity to comprise about 5-60% by volume of the densified composite material, of one or more first dispersoid materials selected from the group consisting of whiskers of carbides, nitrides, and carbonitrides of titanium, hafnium, tantalum, niobium, and tungsten, and solid solutions thereof; (3) optionally, one or more other dispersoid materials selected from the group consisting of particles and polycrystalline fibers of carbides, nitrides, and carbonitrides of titanium, zirconium, hafnium, vanadium, niobium, tantalum, chromium, molybdenum, and tungsten, and silicon carbide, titanium diboride, and hafnium diboride, and mixtures and solid solutions thereof, the other dispersoid materials comprising about 0-95% by volume of the combined first dispersoid materials and other dispersoid materials, and the combined dispersoid materials being in an amount to comprise about 5-70% by volume of the densified composite material; and (4) sufficient quantities of a suitable polymeric binders and solvents to form a mixture cold-pressable to form a green compact;

screening the mixture to obtain a minus 60 mesh fraction of the mixture;

cold-pressing the mixture to form a green compact;

heating the green compact in an inert atmosphere to remove the residual solvents and binders; and

consolidating the mixture to form a densified composite material comprising: a two phase matrix comprising a first phase of silicon aluminum oxynitride grains and a second, continuous, intergranular phase formed from the densification aids and alumina; and the combined dispersoid materials substantially uniformly distributed in the two-phase matrix; the densified composite material having a density greater than about 98% of theoretical and a fracture toughness greater than or equal to 3.5 MPa•m$^{\frac{1}{2}}$.

21. A method for continuous or interrupted machine cutting of cast iron stock by milling, turning, or boring with a shaped tool wherein the shaped tool is a densified composite material in accordance with claim 1.

22. A method for continuous or interrupted machine cutting of high nickel alloy stock comprising at least 50% nickel by milling, turning, or boring with a shaped tool wherein the shaped tool is a densified composite material in accordance with claim 1.